# EUROPEAN PATENT APPLICATION

(11) **EP 2 860 702 A1**
(43) Date of publication of application: **15.04.2015**
(21) Application number: 13803623.1
(22) Date of filing: 24.04.2013
(51) Int. Cl.: G06T 19/00

(54) **INFORMATION PROCESSING DEVICE, INFORMATION PROCESSING METHOD, AND PROGRAM**

(30) Priority: 12.06.2012 JP 2012133320
(71) Applicant: Sony Corporation, Tokyo 108-0075 (JP)
(72) Inventor: HANAI, Yuya, Tokyo 108-0075 (JP)
(74) Representative: MFG Patentanwälte Meyer-Wildhagen Meggle-Freund Gerhard PartG mbB
(86) International application number: PCT/JP2013/061996
(87) International publication number: WO 2013/187130

(57) **Abstract**

There is provided an information processing device including an acquisition section configured to acquire a captured image captured by an imaging section, and a data processing section configured to superimposedly display a virtual image generated by changing an input image on the captured image in a display section. The data processing section displays, on the display section, the virtual image generated by changing one of a relative position and a relative angle of the imaging section and the input image, which are virtually set, in a time series.

## Description

### Technical Field

The present disclosure relates to an information processing device, an information processing method, and a program. In particular, the present disclosure relates to an information processing device, an information processing method, and a program, which perform an augmented reality (AR) display.

### Background Art

For example, an image, in which a virtual image other than a captured image is superimposed on a captured image of a camera, is called an augmented reality (AR) image and has recently been used in various fields.

In particular, in recent years, portable terminals, such as a smartphone having a camera function and a display as well as a communication function, have been widespread, and applications that apply an AR image to such a smartphone are widely used.

As one example of use of the AR image, there is the following example.

For example, a poster of a person is captured using a camera function of a portable terminal such as a smartphone and is displayed on a display section of the smartphone.

A data processing section of the smartphone identifies a captured poster or a marker set to the poster and acquires image data, which corresponds to a person moved to the poster, from a storage section or an external server.

Furthermore, the acquired image is superimposedly displayed on the captured image. Such processing makes it possible to display and observe an image such that a person pops out from the poster.

Incidentally, as an example of related art disclosing the generation and display processing of an AR image, there is Patent Literature 1 (JP 2012-58838A).

Furthermore, by enlarging a person image popping out from the poster with the passage of time, it is possible to display an AR image such that the person approaches a user side holding the smartphone.

For example, when a camera captures a poster in an oblique direction, a person printed on the poster is displayed on a captured image as an image viewed in an oblique direction. In order to generate a natural AR image such that a person viewed in an oblique direction pops out from a poster, an image to be superimposed also needs to be an image of a person viewed in an oblique direction, just like the poster.

However, if the image of the person viewed in the obliquely direction is generated as an image approaching a user side with the passage of time, it becomes an unnatural image because the person viewed in the oblique direction approaches to the user side, while keeping an orientation as it is.

### Citation List

### Patent Literature

Patent Literature 1: JP 2012-58838A

### Summary of Invention

### Technical Problem

The present disclosure has been made in view of, for example, the above problems, and provides an information processing device, an information processing method, and a program. According to the present disclosure, in a configuration that superimposedly displays a virtual image on a captured image captured by a camera of a portable terminal held by a user and displayed on a display section, for example, a more natural AR image can be displayed by performing control of changing a position or an angle of a virtual image, such as a person, according to time.

### Solution to Problem

According to a first aspect of the present disclosure, there is provided an information processing device including:
an acquisition section configured to acquire a captured image captured by an imaging section; and
a data processing section configured to superimposedly display a virtual image generated by changing an input image on the captured image in a display section,
wherein the data processing section displays, on the display section, the virtual image generated by changing one of a relative position and a relative angle of the imaging section and the input image, which are virtually set, in a time series.

According to an embodiment of the present disclosure, the data processing section generates the virtual image, of which at least one of the display position and the display angle is changed in a time series, by performing image conversion processing to which metadata set in association with each frame of a moving image content of the virtual image is applied.

According to an embodiment of the present disclosure, the data processing section acquires parameters, including a relative position parameter Rpos to be applied for determining the display position of the virtual image and a relative angle parameter Rrot to be applied for determining the display angle of the virtual image, as metadata set in association with each frame of the moving image content of the virtual image, applies the acquired parameters, generates the virtual image, of which at least one of the display position and the display angle is changed in a time series, and superimposedly displays the virtual image on the captured image.

According to an embodiment of the present disclosure, the data processing section calculates a transform parameter that transforms a model view matrix Mmarker corresponding to an initial image of the virtual image into a model view matrix Mdisplay corresponding to a last image of the virtual image, multiplies the relative position parameter Rpos or the relative angle parameter Rrot, which are metadata set corresponding to each virtual image frame, with respect to the calculated transform parameter, calculates offset information to be applied to conversion processing of each virtual image frame, performs conversion processing of the virtual image frame to which the calculated offset information is applied, and generates the moving image of the virtual image of which at least one of the display position and the display angle is changed in a time series.

According to an embodiment of the present disclosure, each of the relative position parameter Rpos and the relative angle parameter Rrot is a value that is sequentially changed in a range of 0 to 1 in each moving image frame from the initial image to the last image of the virtual image.

According to an embodiment of the present disclosure, the data processing section performs blurring process on the virtual image of a boundary portion between the virtual image and the captured image upon the processing of superimposedly displaying the virtual image on the captured image.

According to an embodiment of the present disclosure, the data processing section performs processing of generating moving image content of the virtual image, calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

According to an embodiment of the present disclosure, the data processing section sets values of the relative position parameter Rpos and the relative angle parameter Rrot in a range of 0 to 1 according to a subject distance of the virtual image in each moving image frame of the moving image content.

According to an embodiment of the present disclosure, the data processing section sets values, which are sequentially changed in a range of 0 to 1 with respect to each moving image frame from an initial image to a last image of the virtual image, as values of the relative position parameter Rpos and the relative angle parameter Rrot.

According to an embodiment of the present disclosure, the data processing section sets values of the relative position parameter Rpos and the relative angle parameter Rrot with respect to each moving image frame constituting the virtual image in different aspects according to a mode setting.

According to an embodiment of the present disclosure, the data processing section outputs restriction information indicating an angle and a distance of a preset allowable range to a display section upon processing of generating moving image content of the virtual image, and generates moving image content of the virtual image including a virtual object within the angle and the distance of the allowable range.

According to a second aspect of the present disclosure, there is provided an information processing device including:
an imaging section configured to performing image capturing; and
a data processing section configured to generate moving image content of a virtual image, based on a captured image of the imaging section,
wherein the data processing section calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

According to an embodiment of the present disclosure, the data processing section sets values of the relative position parameter Rpos and the relative angle parameter Rrot in a range of 0 to 1 according to a subject distance of the virtual image in each moving image frame of the moving image content.

According to a third aspect of the present disclosure, there is provided an information processing device including:
an imaging section configured to performing image capturing;
a display section configured to display a captured image of the imaging section; and
a data processing section configured to superimposedly display a virtual image on the captured image displayed on the display section,
wherein the data processing section acquires, from a server, a moving image of the virtual image, of which at least one of a display position and a display angle is changed in a time series, and superimposedly displays the acquired virtual image on the captured image.

According to a fourth aspect of the present disclosure, there is provided an information processing method, which is performed by an information processing device,
wherein the information processing device includes an acquisition section configured to acquire a captured image captured by an imaging section, and a data processing section configured to superimposedly display a virtual image generated by changing an input image on a display section, and
wherein the data processing section displays, on the display section, the virtual image generated by changing one of a relative position and a relative angle of the imaging section and the input image, which are virtually set, in a time series.

According to a fifth aspect of the present disclosure, there is provided an information processing method, which is performed by an information processing device,
wherein the information processing device includes an imaging section configured to perform image capturing, and a data processing section configured to generate moving image content of a virtual image, based on a captured image of the imaging section, and
wherein the data processing section calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

According to a sixth aspect of the present disclosure, there is provided a program for causing an information processing device to execute information processing,
wherein the information processing device includes:
an acquisition section configured to acquire a captured image captured by an imaging section; and
a data processing section configured to superimposedly display a virtual image generated by changing an input image on the captured image in a display section, and
wherein the program causes the data processing section to display, on the display section, the virtual image generated by changing one of a relative position and a relative angle of the imaging section and the input image, which are virtually set, in a time series.

According to a seventh aspect of the present disclosure, there is provided a program for causing an information processing device to execute information processing,
wherein the information processing device includes an imaging section configured to perform image capturing, and a data processing section configured to generate moving image content of a virtual image, based on a captured image of the imaging section, and
wherein the program causes the data processing section to calculate parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and store the calculated parameters in a storage section as metadata corresponding to image frames.

Note that the program according to the present disclosure is a program that can be provided in a storage medium or communication medium that is provided in a computer-readable form for an information processing device or a computer system that is capable of executing various types of program code, for example. Providing this sort of program in a computer-readable form makes it possible to implement the processing according to the program in the information processing device or the computer system.

The object, features, and advantages of the present disclosure will be made clear later by a more detailed explanation that is based on the embodiments of the present disclosure and the appended drawings. Furthermore, the system in this specification is not limited to being a configuration that logically aggregates a plurality of devices, all of which are contained within the same housing.

### Advantageous Effects of Invention

According to the configuration of one embodiment of the present disclosure, a virtual image, of which a display position or a display angle is changed, can be superimposedly displayed on a captured camera image displayed on a display section with the passage of time.

Specifically, the configuration includes an imaging section, a display section configured to display a captured image of the imaging section, and a data processing section configured to superimposedly display a virtual image on the captured image displayed on the display section. The data processing section superimposedly displays the moving image of the virtual image, of which the display position and the display angle are changed in a time series, on the captured image. The data processing section acquires the parameters, that is, the relative position parameter Rpos to be applied for determining the display position of the virtual image and the relative angle parameter Rrot to be applied for determining the display angle of the virtual image, as the metadata corresponding to the frame of the virtual image content, applies the acquired parameters, and generates and superimposedly displays the virtual image, of which the display position or the display angle is changed in a time series.

According to such configurations, the virtual image, of which the display position or the display angle has been changed with the passage of time, can be superimposedly displayed on the captured camera image.

### Brief Description of Drawings

[FIG. 1] FIG. 1 is a diagram describing an overview of processing of the present disclosure.
[FIG. 2] FIG. 2 is a diagram illustrating a flowchart describing a sequence of content generation processing of the present disclosure.
[FIG. 3] FIG. 3 is a diagram illustrating a flowchart describing a sequence of content display processing of the present disclosure.
[FIG. 4] FIG. 4 is a diagram describing a display angle control of a virtual image to be superimposedly displayed.
[FIG. 5] FIG. 5 is a diagram describing a display angle control of a virtual image to be superimposedly displayed.
[FIG. 6] FIG. 6 is a diagram describing a display angle control of a virtual image to be superimposedly displayed.
[FIG. 7] FIG. 7 is a diagram describing a configuration example of an information processing device.
[FIG. 8] FIG. 8 is a diagram describing a configuration of limitation upon generation of virtual image content.
[FIG. 9] FIG. 9 is a diagram describing a display example of description information and icons for realizing a configuration of limitation upon generation of virtual image content.
[FIG. 10] FIG. 10 is a diagram describing a specific example of adaptive masking processing.
[FIG. 11] FIG. 11 is a diagram illustrating a flowchart describing a sequence of adaptive masking processing.
[FIG. 12] FIG. 12 is a diagram describing a configuration example of an information processing device that performs adaptive masking processing.
[FIG. 13] FIG. 13 is a diagram describing a configuration example of an information processing device that performs object clipping processing.

### Description of Embodiments

Hereinafter, an information processing device, an information processing method, and a program according to the present disclosure will be described in detail with reference to the appended drawings. Note that description will be provided in the following order.
1. Overview of Processing of Present Disclosure
2. First Embodiment of Present Disclosure
2-1. Processing of Generating Moving Image Content of Virtual Image
2-2. Processing of Superimposedly Displaying Moving Image Content of Virtual Image on Captured Image
3. Configuration Example of Information Processing Device
4. Modifications
4-1. Embodiment in Which Restriction on Position of Subject is Set upon Generation of Virtual Image Content
4-2. Embodiment that Performs Image Edge Processing upon Virtual Image Display Processing
4-3. Embodiment that Performs Processing on Plurality of Virtual Images
4-4. Processing Example in Which Part of Processing is Performed in Network-connected Server
5. Summary of Configuration of Present Disclosure

### [1. Overview of Processing of Present Disclosure]

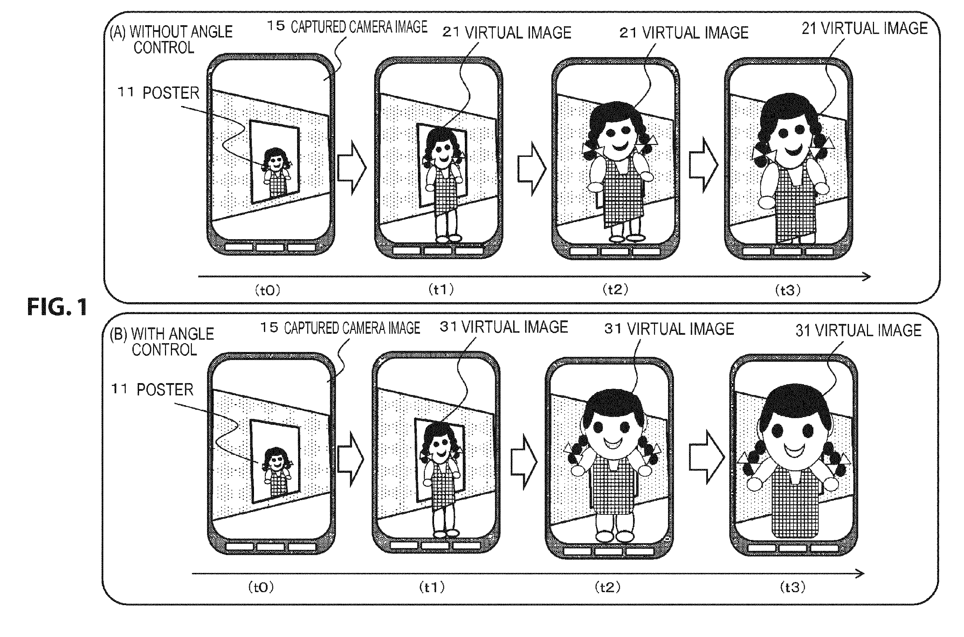

First, the overview of processing of the present disclosure will be described with reference to FIG. 1.

FIG. 1 illustrates a display processing example of the following two AR images.
(A) Virtual Image Display Processing without Angle Control
(B) Virtual Image Display Processing with Angle Control

Both are diagrams in which a user captures a poster 11, on which a person is printed, by using a portable terminal such as a smartphone with a camera function and a captured camera image 15 is displayed on a display section of the portable terminal with the passage of time (t0 to t4).

In both of (A) and (B), a virtual image, not a captured image, is superimposedly displayed on a captured image.

The virtual image is, for example, two-dimensional image data of the same real person as the person printed on the poster 11 and is, for example, image data stored in a storage section of a portable terminal such as a smartphone or image data provided from a server through a network.

The user captures the poster 11 in an oblique direction. In the virtual image display processing without angle control illustrated in FIG. 1(A), in order to display an image such that the person pops out from the obliquely captured poster, a virtual image 21 to be superimposedly displayed is also an image of a person viewed in an oblique direction, just like the poster.

After that, moving image display processing, to which the image viewed in the oblique direction is applied, is performed so as to display an image such that the person approaches the user side with the passage of time (t0 to t4).

However, in spite of approaching the camera, the virtual image 21 of time (t3) or (t4) illustrated in FIG. 1(A) is still an image in which the person is viewed from the oblique direction. Thus, the virtual image 21 is recognized as an unnatural image as approaching the user. Therefore, it is apparent that the virtual image 21 will be recognized as an image pasted separately from the captured image. This is caused by direct application of an image captured in the same capturing direction as an initial image of time (tO).

In contrast, virtual image display processing with angle control of FIG. 1(B) is a display processing example of a virtual image to which the processing of the present disclosure, which is to be described below, is applied.

In the example illustrated in FIG. 1(B), as opposed to FIG. 1(A), a display angle of a virtual image 31 is changed from an oblique direction to a front direction with the passage of time (t1 → t4).

Such an angle control of the virtual image makes it possible to provide an image in which a person popping out from a poster approaches a user more naturally.

In the example illustrated in FIG. 1(B), the processing of changing the direction or the like of the virtual image is performed on the image captured in the same capturing direction as the initial image of time (t0) by performing the angle control according to, for example, a distance of the virtual image. Due to this processing, a more natural virtual image can be displayed.

Hereinafter, the processing of the present disclosure, which realizes such an image display, will be described in detail.

In order to perform the image display as illustrated in FIG. 1(B), for example, a (ratio of) relative position and angle of a camera is set as metadata to the respective frames constituting moving image content of the virtual image.

The metadata is set as data corresponding to distance information of an object to be displayed as the virtual image, for example, an object such a person.

Incidentally, for example, the distance information can use a depth map in which a subject distance from the camera is set by a pixel unit. The depth map can be generated in advance by processing using data captured by a compound eye camera or by using a device that acquires distance information (depth) separately from the camera.

Also, even when there is no depth map, if an object subjected to distance measurement is a person, a distance can be determined from a size of a face by using a face detection.

Also, a user or an operator may manually set the distance information.

Incidentally, although described in the following embodiment in detail, various settings can be performed as the mode of the angle control processing of the person popping out from the poster, for example, as illustrated in FIG. 1(B).

For example, after the person displayed as the virtual image approaches the camera or moves far away from the camera with the passage of time, the control can be performed such that the angle between the virtual image and the camera is set to be constant, such as a front direction all the time.

Incidentally, the device that performs the image capture and display is not limited to the smartphone and can be realized by various information processing devices, for example, a PC or a glass-type AR glass.

By applying the processing of the present disclosure, a more natural virtual image can be displayed in a configuration that superimposedly displays a virtual image such as a person on a base image such as a captured camera image displayed on the information processing device such as the smartphone or the AR glass.

Specifically, by changing a display position or a display angle with the passage of time, a more natural virtual image can be displayed, that is, an image can be displayed such that a virtual image exists on a base image such as a captured image that is a superimposition target.

Incidentally, when the virtual image is, for example, a real person image, the permeability of pixel portions other than the person is maximized and image data with α channel information of pixel unit, called permeability information or mask information such as setting the permeability of a person region to 0, can be used as the virtual image to be superimposed. By superimposing content with such α channel information on the captured image, only the person region included in the virtual image is superimposed on the captured image of the client and the captured image is directly displayed on the image region other than the person.

### [2. First Embodiment of Present Disclosure]

A first embodiment of the present disclosure will be described.

The following two processings are required for realizing the processing of superimposedly displaying a virtual image on a captured camera image as described above with reference to FIG. 1(B).
(a) Processing of generating moving image content of virtual image
(b) Processing of superimposedly displaying moving image content of virtual image, which is generated in the processing (a), on captured image

Hereinafter, such processing will be sequentially described.

### [2-1. Processing of Generating Moving Image Content of Virtual Image]

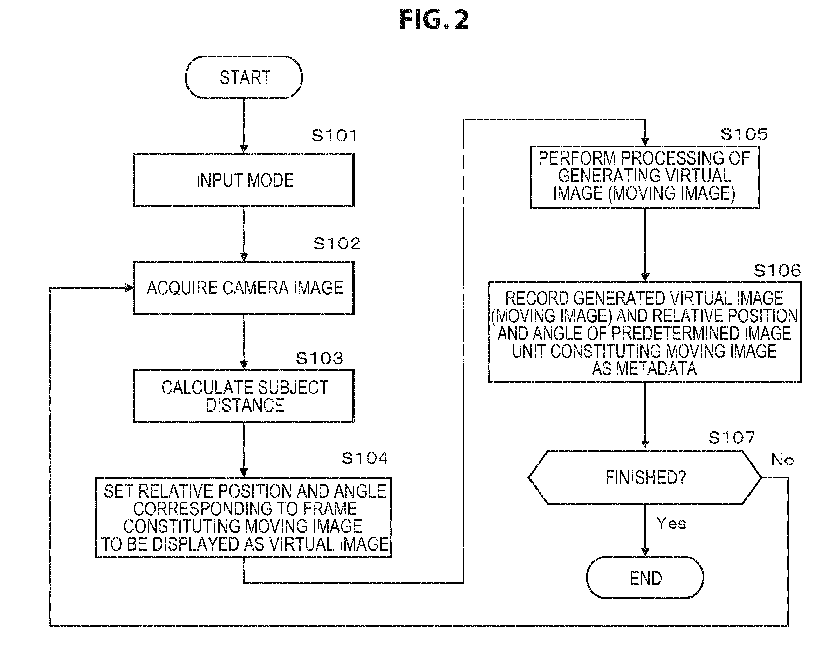

First, the sequence of the processing of generating the moving image content of the virtual image for displaying the virtual image 31 illustrated in FIG. 1(B) will be described with reference to a flow illustrated in FIG. 2.

Incidentally, the processing of generating the moving image content may be performed in, for example, the information processing device such as the smartphone, or may be performed in other information processing device such as a PC.

Incidentally, the processing illustrated in the flow is performed under the control of a data processing section, that is, a data processing section having a CPU or the like with a program execution function, according to a program stored in a storage section of the information processing device.

Hereinafter, details of the processing of the respective steps will be sequentially described.

### (Step S101)

First, the data processing section of the information processing device allows the user to input mode setting information through an input section and determines how to direct a "pop-out effect". As an example of a setting mode, there are the following two types.

### (1) Simple Mode

A simple mode is a mode that determines an angle and a position formed with a virtual image subjected to camera superimposition display simply according to a distance between a virtual image and a camera (information processing device).

### (2) Constant Mode

A constant mode is a mode that performs processing of setting an angle formed with a camera to be constant, for example, a front direction, after popping out a virtual image from a poster or the like that is a captured object of a base image being a captured image.

Incidentally, such modes may be set to an either-or mode, but may also be configured to be set to a mode between the simple mode and the constant mode.

Also, it may be configured such that a speed at which the angle formed with the camera is changed is input as a parameter through the input section by the user, and the data processing section performs control according to the input parameter.

### (Step S102)

Next, in step S102, processing of acquiring a camera image by applying an imaging section (section) of the information processing device is performed. This is the processing of acquiring the captured image made up of, for example, a person to be displayed as a virtual image. For example, a person is captured in a studio with greenback equipment.

### (Step S103)

Next, in step S103, a distance to an object of the person being a subject to be displayed as a virtual image is calculated.

Incidentally, as a method of acquiring subject distance information, various methods can be applied.

Specifically, for example, the following methods can be applied.
(a) A depth map is generated by acquiring a distance with a combination of a near-infrared camera as in a stereo version using a compound eye camera or Kinect. An average depth in a region of a clipped object, which has been image-processed using a generated depth map, is set as a distance.
(b) When a subject object to be displayed as a virtual image is a person, a distance is estimated from a size by using a face detection or a human body detection.
(c) A distance is estimated from a size of a region area of a clipped object that has been image-processed.

### (Step S104)

Subsequently, in step S104, the information processing device sets a relative position and angle of an object, for example, a person, which is to be displayed as a virtual image, as metadata (attribute information) corresponding to the respective frames constituting moving image content of the virtual image.

Hereinafter, a detailed algorithm of the metadata setting processing will be described.

Incidentally, the metadata setting processing is different according to the above-described modes.

That is, the processing is different in the "simple mode" and the "constant mode".

Hereinafter, metadata setting processing algorithms corresponding to the respective modes will be described.

### (Regarding Metadata Setting Algorithm in Simple Mode)

As described above, a simple mode is a mode that determines an angle and a position of a virtual image subjected to camera superimposition display simply according to a distance between a virtual image and a camera (information processing device).

First, the following variables are defined.

Distance at operation start point: Dstart

Distance at processing time: Dproc

Minimum distance at moving image sequence: Dmin

For example, the distance Dstart at operation start point corresponds to the distance from the camera to the poster in the example of FIG. 1(B).

The distance Dproc at processing time corresponds to the distance from the camera to the virtual image at the time (t0 to t4) in the example of FIG. 1(B).

The minimum distance Dmin at moving image sequence corresponds to the distance from the camera to the virtual image at the time (t4) in the example of FIG. 1(B).

When Dstart >= Dproc >= Dmin >= 0,
a relative position parameter Rpos and a relative angle parameter Rrot are defined as follows.
Rpos = (Dstart - Dproc)/(Dstart - Dmin)
Rrot = (Dstart - Dproc)/(Dstart - Dmin)

As can be seen from the above formula,
relative position parameter: Rpos = 0 to 1
relative angle parameter: Rrot = 0 to 1

These values can be acquired.

When the distance Dproc at processing time is equal to the distance Dstart at operation start point, that is, for example, at the time (t0) of the setting of FIG. 1(B),
Rpos = 0
Rrot = 0

Also, when the distance Dproc at processing time is equal to the minimum distance Dmin at moving image sequence, that is, for example, at the time (t4) of the setting of FIG. 1(B),
Rpos = 1
Rrot = 1

That is, both the relative position parameter Rpos and the relative angle parameter Rrot are parameters that continuously change the value of 0 to 1 from the operation start point to the minimum distance.

Virtual image display processing, to which these parameters are applied, will be described in the latter part.

For example,
relative position parameter: Rpos = 0,
relative angle parameter: Rrot = 0

In such parameter setting, as in the time (t0) of FIG. 1(B), the processing of superimposedly displaying the same virtual image as the poster is performed.

That is, the position and the angle of the virtual object are set to be equal to the poster of the captured image.

Also,
relative position parameter: Rpos = 1,
relative angle parameter: Rrot = 1

In such parameter setting, as in the time (t4) of FIG. 1(B), the processing of locating the virtual image to a predetermined position closest to the camera and displaying the virtual image in a front direction is performed.

Virtual image display processing, to which these parameters are applied, will be described in the latter part.

Incidentally, the parameter definition formula, that is,
relative position parameter: Rpos = (Dstart - Dproc)/(Dstart - Dmin)
relative angle parameter: Rrot = (Dstart - Dproc)/(Dstart - Dmin)

These parameter definition formulas are an example and various modifications can be made.

For example, by introducing a distance threshold value Dlim at which the angle formed with the camera is equal to 0, parameters may be set according to the following algorithm.
Relative position parameter: Rpos = (Dstart - Dproc)/(Dstart - Dmin)
If Dproc < Dlim Then
Rrot = 1.0
Else
Rrot = (Dstart - Dproc)/(Dstart - Dlim)
Endif

The above parameter setting algorithm is an algorithm that performs the processing of setting the angle formed between the virtual image object and the camera to zero, that is, setting the person as the virtual image in the front direction, on the condition that the virtual image object has arrived at a predetermined distance (Dlim) before arriving at the minimum position (Dmin).

Incidentally, such algorithm setting processing can be performed by, for example, the mode setting or the parameter input through the input section of the information processing device.

In the simple mode, the relative position parameter Rpos and the relative angle parameter Rrot are sequentially set as metadata to the frames constituting the moving image content of the virtual image in a time series.

For example, when the moving image content is 1,000 frames made of frames 0 to 1,000,
relative position parameter: Rpos = 0 to 1,
relative angle parameter: Rrot = 0 to 1,

These parameters are sequentially set to the frames constituting the moving image content of the virtual image in a time series.

### (Regarding Metadata Setting Algorithm in Constant Mode)

As described above, a constant mode is a mode that performs processing of setting an angle formed with a camera to be constant, for example, a front direction, after popping out a virtual image from a poster or the like that is a captured object of a base image being a captured image.

In the constant mode,
variables defined in the simple mode, that is,
distance at operation start point: Dstart
distance at processing time: Dproc
minimum distance at moving image sequence: Dmin
In addition to these variables,
time Tlim below the distance threshold value Dlim, at which the angle formed with the camera is zero, for the first time,
processing time Tproc,
These variables are defined.

In the constant mode, the relative angle parameter Rrot is calculated according to the following algorithm.
If Tproc >= Tlim Then
Rrot = 1.0
Else
Rrot = (Dstart - Dproc)/(Dstart - Dlim)
Endif

Incidentally, the relative position parameter Rpos may be set as in the simple mode.

In the above algorithm, the virtual image can be displayed such that "the angle formed with the camera after popping out once is always zero".

In the constant mode, the relative position parameter Rpos and the relative angle parameter Rrot are sequentially set as metadata to the frames constituting the moving image content of the virtual image in a time series.

For example, when the moving image content is 1,000 frames made of frames 0 to 1,000,
relative position parameter: Rpos = 0 to 1,
relative angle parameter: Rrot = 0 to 1,

These parameters are sequentially set to the frames constituting the moving image content of the virtual image in a time series.

### (Step S105)

Subsequently, in step S105, the information processing device performs the processing of generating moving image content of the virtual image.

Specifically, the processing of generating the image in which the object to be superimposedly displayed, for example, only the person, is clipped is performed.

For example, when the virtual image is a real person image, the permeability of pixel portions other than the person is maximized and image data with α channel information of pixel unit, called permeability information or mask information such as setting the permeability of a person region to 0, is generated. By superimposing content with such α channel information on the captured image, only the person region included in the virtual image is superimposed on the captured image of the client and the captured image is directly displayed on the image region other than the person.

### (Step S106)

Subsequently, the information processing device records the metadata generated in step S104 and the image data generated in step S105 in association with each other. For example, the processing of recording in media such as a hard disk or a flash memory is performed.

### (Step S107)

Finally, in step S107, the finish determination is performed.

When a next frame is present in the moving image sequence being processed, the processing returns to step S102 and the next frame is processed. When all the processing has been finished, the processing is ended.

### [2-2. Processing of Superimposedly Displaying Moving Image Content of Virtual Image on Captured Image

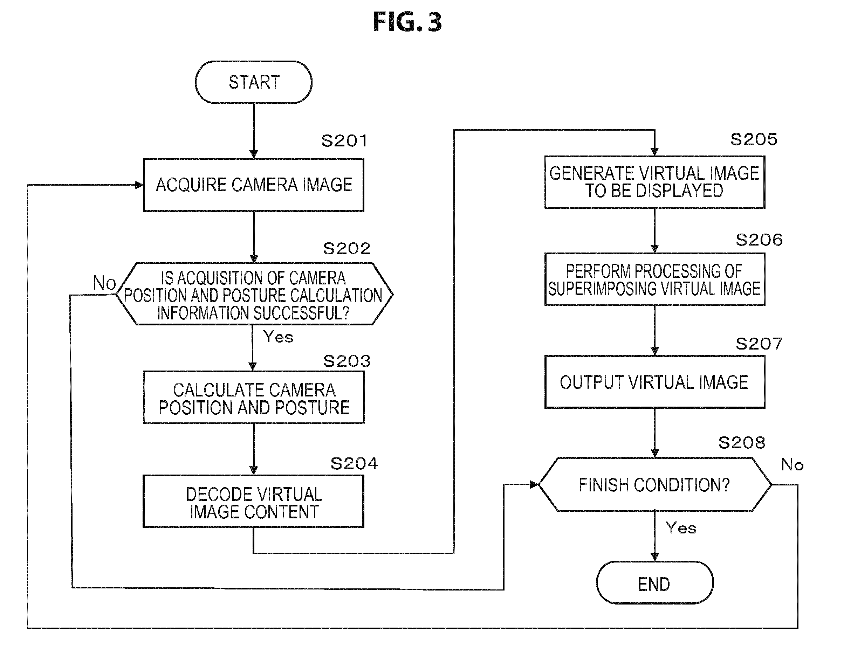

Next, the sequence of the processing of displaying the moving image content made up of the virtual image for superimposition display, which is generated according to the flow illustrated in FIG. 2, will be described with reference to a flowchart illustrated in FIG. 3.

Incidentally, the processing of superimposedly displaying the moving image content of the virtual image on the captured image is performed by, for example, the information processing device including the imaging section (camera) such as the smartphone and the display section. Incidentally, in addition, in any configuration including the imaging section (camera) and the display section, for example, the processing can be performed in various devices such as a PC or an AR glass.

Incidentally, the processing illustrated in the flow is performed under the control of a data processing section, that is, a data processing section having a CPU or the like with a program execution function, according to a program stored in a storage section of the information processing device.

Hereinafter, details of the processing of the respective steps will be sequentially described.

### (Step S201)

First, the data processing section of the information processing device performs image captures an image through the imaging section (camera) of the information processing device and acquires a captured image.

For example, the captured image is an image of time (t0) as illustrated in FIG. 1(B).

### (Step S202)

Subsequently, in step S202, the information processing device determines whether information acquisition for calculating position and angle information of the camera, which is necessary at a later stage, is successful.

An example of the information for calculating the position and angle information of the camera is a marker included in the captured image. The marker is a two-dimensional bar code such as, for example, a cyber-code printed in advance in the poster 11 illustrated in FIG. 1. When such a marker is recognized, the position or the angle of the camera can be calculated from an angle of a marker reflected on a camera image.

Incidentally, the information for calculating the position and angle information of the camera is not limited to the marker such as the cyber-code, and may be an object itself such as a poster or a CD jacket.

What is used as the information for calculating the position and angle information of the camera is different according to the camera position and angle calculation processing algorithm performed by the information processing device, and the application information can be variously set.

For example, just like the recognition of a three-dimensional position of the camera by extracting and tracking a feature point from an image captured by the camera of the information processing device, position identification processing to which a simultaneous localization and mapping (SLAM) technology is applied may be performed. Incidentally, the processing to which the SLAM is applied will be described in, for example, JP 2011-43419A, filed by the same applicant as the applicant of the present application.

Also, in addition, as the information for calculating the position and angle information of the camera, information of a sensor included in the information processing device may be applied.

As such, in step S202, it is determined whether the acquisition of the camera position and angle information, which is performed by the information processing device, is successful.

When the information is not acquired, it is determined that subsequent AR image generation processing is impossible, and the processing is ended.

When the information is acquired, the processing proceeds to step S203.

### (Step S203)

Subsequently, in step S203, the information processing device calculates a current position and orientation of the information processing device (camera) by applying the information acquired in step S202.

### (Step S204)

Subsequently, in step S204, the information processing device performs the processing of decoding the virtual image content to be superimposedly displayed.

### (Step S205)

Subsequently, in step S205, the information processing device performs the processing of generating the virtual image to be displayed on the display section of the information processing device by using the camera position and angle information acquired in step S203 and the parameters set as the metadata corresponding to each image frame of the virtual image content.

Incidentally, the parameters set as the metadata of the respective frames of the virtual image content are the following parameters described above with reference to the flow of FIG. 2.
Relative position parameter: Rpos,
Relative angle parameter: Rrot

Specifically, for example, when the parameters set to the virtual image frame are an image set as follows:
Rpos = 0
Rrot = 0
the virtual image is superimposed at the position and angle pasted in the marker of the captured image.

For example, the virtual image is superimposedly displayed on the person of the poster 11 of time (t0) of FIG. 1B at the same position and angle.

On the other hand, for example, when the parameters set to the virtual image frame are an image set as follows:
Rpos = 1
Rrot = 2
the virtual image is superimposed at a position closest to the information processing device side and in the front direction.

For example, the virtual image corresponding to the virtual image 31 illustrated in time (t3) of FIG. 1B is superimposedly displayed.

Incidentally, as described above with reference to the flow of FIG. 2, the virtual image content is the moving image content and the following parameters are separately set to the respective frames constituting the moving image content.
Relative position parameter: Rpos = 0 to 1,
Relative angle parameter: Rrot = 0 to 1,

The information processing device acquires the two or more parameters corresponding to the frame for each image frame of the virtual image content, and calculates a display position and a display angle of the virtual image of each image frame. Furthermore, image conversion processing, to which these parameters are applied, is performed on the virtual image of each image frame to generate a converted virtual image with a display position and a display angle corresponding to each image frame. The converted virtual image generated by the conversion processing is superimposedly displayed.

In the image conversion processing, for example, the following processing is included with respect to each image frame of the virtual image content.
(a) Rotation processing
(b) Scale change processing (zoom in, zoom out)
(c) Parallel translation processing

In order to perform the above processings (a) to (c) on each image frame of the virtual image content, the information processing device calculates processing parameters with respect to the respective processings (a) to (c) corresponding to the respective image frames.

The processing parameters are calculated in the following order.
First, the following two model view matrixes are acquired.
(A) Initial state model view matrix (Mmarker)
   Model view matrix of the virtual image of the same position and angle as the virtual image being the initial state of the virtual image content, for example, the person of the poster 11 of the time (t0) illustrated in FIG. 1(B): Mmarker
(B) Final state model view matrix (Mdisplay)
   Model view matrix of the virtual image that is the virtual image being the final state of the virtual image content, for example, the virtual image that is closest to the information processing device (camera) of the time (t3) illustrated in FIG. 1(B) and is directed in the front direction, and the virtual image normalized in a display: Mdisplay
   These are acquired from the storage section or generated based on each image.

Incidentally, the model view matrix is a matrix that indicates a position and an orientation of a model (virtual image corresponding to the person in the example illustrated in FIG. 1) and is a transform matrix that transforms three-dimensional coordinates of a reference coordinate system into a camera coordinate system.

Incidentally, these model view matrixes may be calculated upon content generation with reference to FIG. 2 and stored in the storage section of the information processing device, and may be calculated from each image upon the processing of step S205 of the flow illustrated in FIG. 3.

Subsequently, the following parameters for transforming the matrix Mmarker into the matrix Mdisplay are calculated by using the two model view matrixes Mmarker and Mdisplay.
Rotation axis :Vrot
Rotation angle: θrot
Scale: Vscale
Translation component: Vtranslate
These parameters are calculated.

Furthermore, by using the metadata set corresponding to each image frame, that is, the parameters
Relative position parameter: Rpos = 0 to 1,
Relative angle parameter: Rrot = 0 to 1,
the following offset information is calculated as parameters that convert the virtual image of each image frame.
(1) Rotation angle offset: Rrot x θrot
(2) Scale offset: Rpos x Vscale
(3) Translation component offset: Rpos x Vtranslate

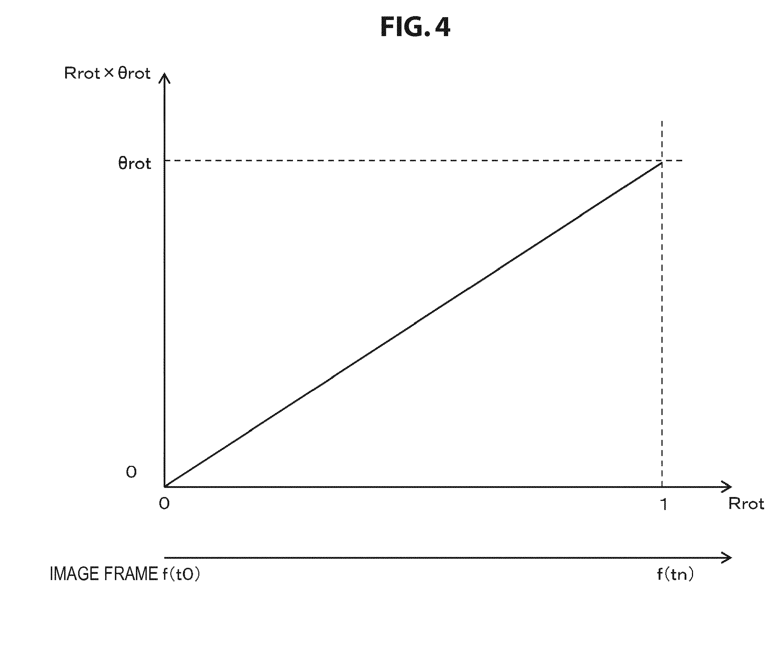

For example, the (1) rotation angle offset Rrot x θrot is set to a value illustrated in a graph of FIG. 4 according to the relative angle parameter Rrot = 0 to 1 set to each image frame of the virtual image content.

FIG. 4 illustrates the relative angle parameter Rrot = 0 to 1 set to each image frame of the virtual image content, on a horizontal axis, and the rotation angle offset Rrot x θrot calculated corresponding to each image, on a vertical axis.

The relative angle parameter Rrot = 0 to 1 of the horizontal axis is a parameter that is set to the respective image frames constituting the moving image, that is, the respective frames of the zeroth frame f(t0) to the last frame f(tn).

At the zeroth frame f(t0), relative angle parameter Rrot = 0, and
rotation angle offset Rrot x θrot = 0.

That is, in this case, the rotation processing is not performed on the virtual image of the zeroth frame f(t0) of the virtual image content, and the image for superimposition display is generated.

Also, at the nth frame f(tn), relative angle parameter Rrot = 1, and
rotation angle offset Rrot x θrot = θrot.

That is, in this case, the image for superimposition display is generated by performing the rotation processing on the virtual image of the nth frame f(tn) of the virtual image content according to the rotation angle θrot for transforming the initial state model view matrix (Mmarker) into the final state model view matrix (Mdisplay).

For the respective frames from the zeroth frame f(t0) to the nth frame f(tn), as in the graph illustrated in FIG. 4,
the rotation angle offset Rrot x θrot is sequentially changed from 0 to θrot according to the relative angle parameter Rrot = 0 to 1 set as the metadata corresponding to the respective images.

That is, the model of the respective virtual image frames, for example, the person of the virtual image 31 illustrated in FIG. 1(B), is displayed while being sequentially and gradually rotated.

The example of the rotation angle offset Rrot x θrot is illustrated in FIG. 4.

However, the same processing is performed on other scale offset Rpos x Vscale and other translation component offset Rpos x Vtranslate. According to the following parameters, which are metadata to which the scale change processing and the translation processing are set to each image, that is,
Relative position parameter: Rpos,
Relative angle parameter: Rrot
the offset information such as the scale offset Rpos x Vscale and the translation component offset Rpos x Vtranslate is determined.

The information processing device calculates such offset information, that is,
(1) Rotation angle offset: Rrot x θrot
(2) Scale offset: Rpos x Vscale
(3) Translation component offset: Rpos x Vtranslate
by applying the relative position parameter Rpos = 0 to 1 and the relative angle parameter Rrot = 0 to 1 set as the metadata corresponding to each image. The information processing device performs the image conversion of each image by applying the calculated offset information and generates the converted virtual image to be superimposedly displayed.

Incidentally, for example, in the example of FIG. 1(B), the moving image content of the virtual image to be converted can use the moving image content in which the person of the poster is captured in an oblique direction, like the initial image of time (tO). By performing different image conversions on the image captured in the oblique direction with the passage of time, the moving image sequence of the virtual image of the front direction can be generated with the passage of time illustrated in FIG. 1(B).

Incidentally, the setting example of the rotation angle offset Rrot x θrot illustrated in FIG. 4 is an example when the relative angle parameter Rrot to be set to each virtual image frame is linearly changed according to the display time of the image frame.

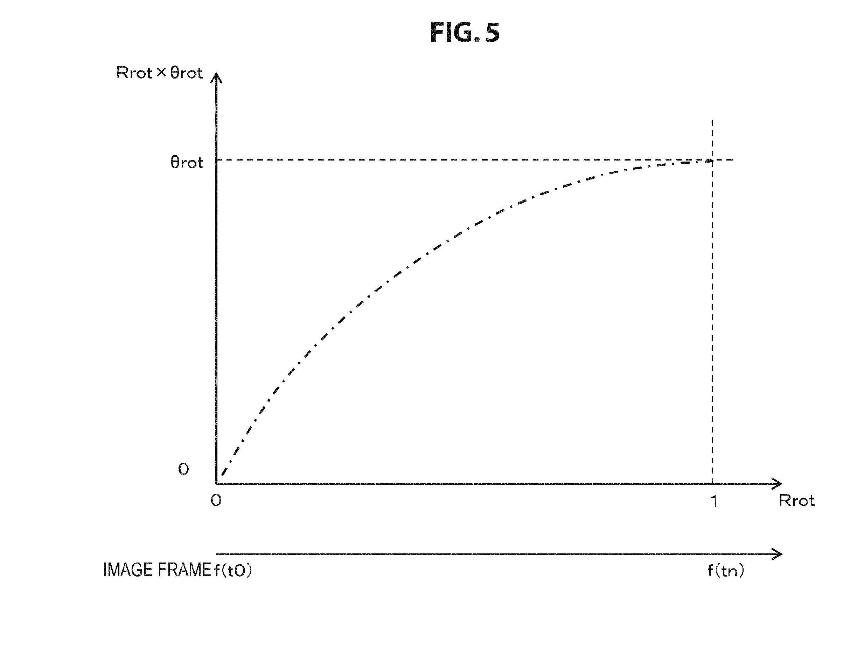

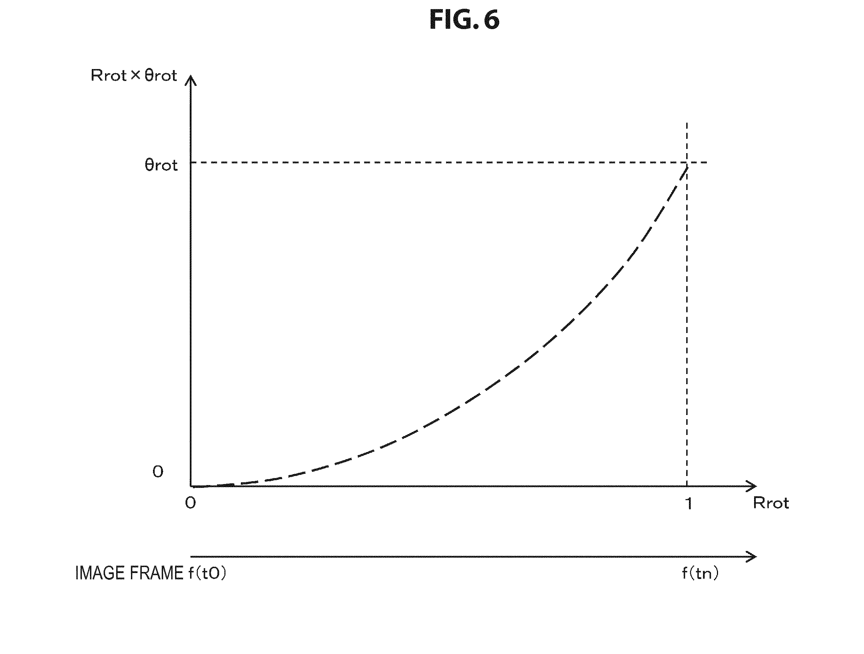

By changing the setting mode of the relative angle parameter Rrot to be set to each virtual image frame, for example, as illustrated in FIGS. 5 and 6, the rotation angle offset Rrot x θrot may be set to be gradually decreased or increased according to the progress of the image. Such processing can gradually decrease or increase the rotation angle of the image according to the progress of the image frame.

The same processing can be performed on other scale offset Rpos x Vscale and other translation component offset Rpos x Vtranslate.

### (Step S206)

Subsequently, in step S206, the information processing device superimposes the virtual image content generated in step S205 on the captured camera image displayed on the display section of the information processing device.

### (Step S207)

Subsequently, in step S207, the information processing device outputs an AR image in which the virtual image is superimposed on the captured image as the final result on the display section (display) of the information processing device.

### (Step S208)

In step S208, it is determined whether a predetermined finish condition, such as the finish of the image capture processing or the finish of the application, occurs, and non-processing is ended when the finish condition occurs. When the finish condition does not occur, the processing returns to step S201 and the same processing is repeated.

In this way, for example, as described with reference to FIG. 1(B), the virtual image, in which the display position or the display angle is sequentially changed, is superimposedly displayed on the captured image displayed on the display section of the information processing device.

### [3. Configuration Example of Information Processing Device]

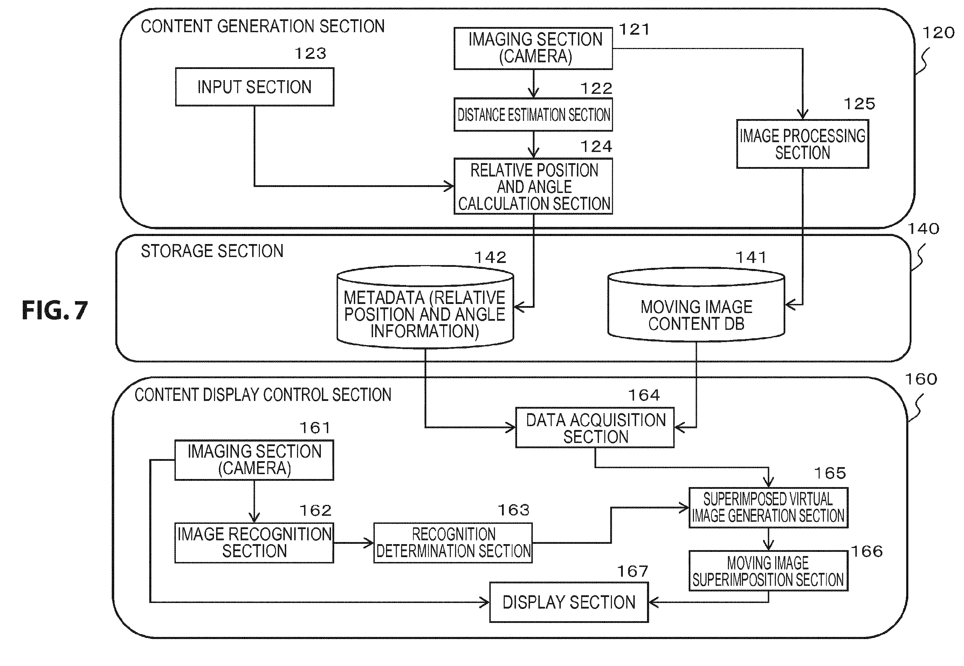

FIG. 7 illustrates a configuration example of the information processing device that performs the above-described processing.

The information processing device includes a content generation section 120 that performs the content generation processing described with reference to the flowchart of FIG. 2, a storage section 140 that stores, for example, the content and the metadata generated in the content generation processing described with reference to FIG. 2, and a content display control section 160 that performs the content display processing described with reference to the flowchart of FIG. 3.

The content generation section 120 performs the content generation processing described with reference to FIG. 2.

The processing, which is performed by the respective sections illustrated in the content generation section 120, will be described in association with the processing of the respective steps of the flow of FIG. 2.

An imaging section (camera) 121 of the content generation section 120 performs the camera image capture processing of step S102 of the flow illustrated in FIG. 2.

A distance estimation section 122 performs the subject distance calculation processing of step S103 of the flow of FIG. 2.

A relative position and angle calculation section 124 performs the processing of step S104 of the flow of FIG. 2, that is, sets the metadata to the respective images in association with the frames constituting the moving image to be displayed as the virtual image. That is,
Relative position parameter: Rpos = 0 to 1
Relative angle parameter: Rrot = 0 to 1
the respective parameters are set as the metadata corresponding to the image.

Incidentally, as described above in the processing of step S104 of the flow of FIG. 2, these parameters are parameters corresponding to the modes. That is,
the simple mode,
the constant mode,
the parameters are set according to the modes.

These modes are set according to the user input through an input section 123.

These parameters calculated by the relative position and angle calculation section 124, that is,
the relative position parameter Rpos = 0 to 1 and the relative angle parameter Rrot = 0 to 1, are stored in a metadata storage section 142 of the storage section 140 in association with the respective image, as the metadata corresponding to the respective images.

An image processing section 125 stores the content acquired by the imaging section (camera) 121, that is, the moving image content of the virtual image, in a moving image content database 141.

Incidentally, in FIG. 7, the moving image content database 141 and the metadata storage section 142 are separately illustrated in the storage section 140, but the image and the metadata may be stored in a single database. In any case, the metadata is recorded in association with each image frame.

Next, the configuration of the content display control section 160 will be described.

The processing, which is performed by the respective sections illustrated in the content display control section 160, will be described in association with the processing of the respective steps of the flow of FIG. 3.

An imaging section (camera) 161 of the content display control section 160 performs the camera image capture processing of step S201 of the flow illustrated in FIG. 3.

The captured image is output and displayed on a display section 167.

An image recognition section 162 and a recognition determination section 163 perform the processing of step S202 of the flow illustrated in FIG. 3, that is, the processing of acquiring the camera position/orientation calculation information and the process of whether the acquisition is possible. Specifically, for example, the processing of recognizing the marker set to the subject such as the poster illustrated in FIG. 1 is performed.

A superimposed virtual image generation section 165 performs the processing of step S205 of the flow illustrated in FIG. 3, that is, the processing of generating the virtual image to be displayed on the display section 167.

A data acquisition section 164 acquires the moving image content stored in the moving image content database 141, acquires the metadata stored in the metadata storage section 142, and outputs the moving image content and the metadata to the superimposed virtual image generation section 165.

Incidentally, when the content is encoded and recorded, the data acquisition section 164 decodes the content and outputs the decoded content to the superimposed virtual image generation section 165.

The superimposed virtual image generation section 165 inputs the moving image content of the virtual image and the metadata corresponding to the respective frames through the data acquisition section 164.

Furthermore, the superimposed virtual image generation section 165 acquires the camera position/orientation information from the recognition determination section 163.

The superimposed virtual image generation section 165 performs the above-described processing of step S205 of the flow of FIG. 3.

That is, by using the metadata set to each image frame, that is, the parameters
Relative position parameter: Rpos = 0 to 1,
Relative angle parameter: Rrot = 0 to 1,
the following offset information is calculated as parameters that convert the virtual image of each image frame.
(1) Rotation angle offset: Rrot x θrot
(2) Scale offset: Rpos x Vscale
(3) Translation component offset: Rpos x Vtranslate

By using such offset information, the image frame conversion processing is performed to generate a converted virtual image to be displayed.

A moving image superimposition section 166 performs the processing of steps S206 and S207 of the flow illustrated in FIG. 3, that is, outputs an AR image by superimposing the virtual image on the captured camera image that is displayed on the display section 167.

Incidentally, the configuration illustrated in FIG. 7 is a diagram illustrating the main configuration of the information processing device. Besides the configuration illustrated in the drawing, the information processing device include, for example, the control section having the CPU or the like that controls the processing described with reference to FIGS. 2 and 3, or the storage section that stores the program to be performed by the control section.

In this way, the virtual image is superimposedly displayed on the captured image that is displayed on the display section of the client.

### [4. Modifications]

Hereinafter, modifications in which the configuration and the processing of the information processing device of the embodiment described above are partially modified will be described.

The following three modifications will be sequentially described.
(1) Embodiment in Which Restriction on Position of Subject is Set upon Generation of Virtual Image Content
(2) Embodiment that Performs Image Edge Processing upon Virtual Image Display Processing
(3) Embodiment that Performs Processing on Plurality of Virtual Images
(4) Processing Example in Which Part of Processing is Performed in Network-connected Server

Hereinafter, such processing will be sequentially described.

### [4-1. Embodiment in Which Restriction on Position of Subject is Set upon Generation of Virtual Image Content]

First, the embodiment in which restriction on the position of the subject is set upon generation of the virtual image content will be described.

The present embodiment is an embodiment that generates virtual image content by setting the restriction on the position of the subject (object) to be superimposedly displayed as the virtual image, that is, the relative position of the camera, upon generation of the moving image content of the virtual image according to the flowchart of FIG. 2 described above.

Specifically, the present embodiment is an embodiment that, in the case of capturing the subject (object) to be superimposedly displayed as the virtual image, can previously restrict the subject position with respect to the camera and generate the virtual image content in which the subject (object) to be superimposedly displayed is captured within an allowable position.

Specifically,
regarding the capturing angle of the subject with respect to the camera, the following restrictions are provided and the virtual image content for superimposition display is generated:
a preset predetermined vertical angle range,
a preset predetermined horizontal angle, and
a preset predetermined distance range for the subject distance from the camera.

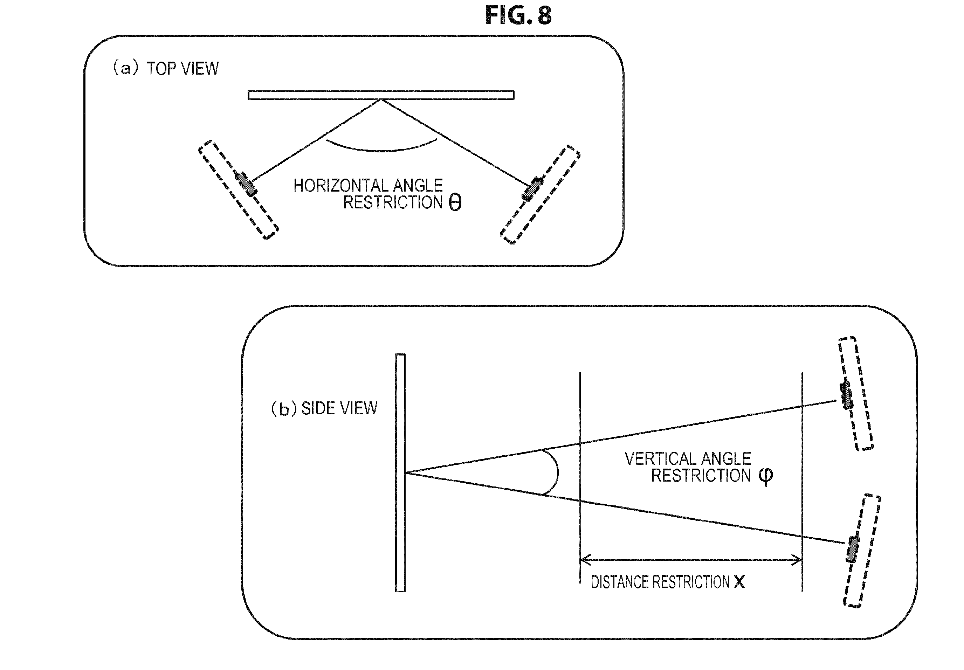

FIG. 8(a) is a diagram illustrating a setting example of a horizontal angle restriction of a camera with respect to a subject.

FIG. 8(b) is a diagram illustrating a setting example of a vertical angle restriction of a camera with respect to a subject and a distance restriction between a subject and a camera.

In capturing the virtual image object in such a manner, the expression of a more natural AR is realized due to the restriction on the capturing angle and the distance.

Incidentally, data of information on the vertical and horizontal angle restrictions and the distance restriction is linked to each image. Alternatively, the data of the information may be linked to each frame of the moving image.

For example, when considering the content such as popping out of the person from the poster, if the camera is shaken in a horizontal direction, it looks natural, but it looks unnatural as if the person pops out in a direction that cannot be if shaken in a vertical direction. Generally, when considering a recognition object, called a poster stuck on a vertical wall, it is difficult to assume the great vertical shaking. However, in the sense of fail-safe, a vertical limit angle is designated by the definition such as "viewing angle" in each moving image content. When the poster is recognized in a state of exceeding the limit angle, the induction is performed to correctly fit into the angle, and the superimposition of AR moving image content is started from that.

Also, the setting of the allowable angle and distance ranges is dependent on the content. For example, it is unnatural if a person pops out in a vertical direction, but it is natural in the case of a bird. When a bird is captured as a virtual object to be superimposedly displayed, the vertical restriction is relaxed.

A table of the allowable angles or the allowable distances according to types of content is stored in the storage section of the information processing device. It is desirable that, if necessary, a content producer selects a type of content to be captured, checks an allowable angle and distance, and captures an image.

Incidentally, depending on the allowable angle information or the allowable distance information read from the table according to the content, the information processing device displays information of whether the current captured image is within the allowable range on the display section that displays the captured image, and displays an instruction icon or a description for prompting an image capture within the allowable range.

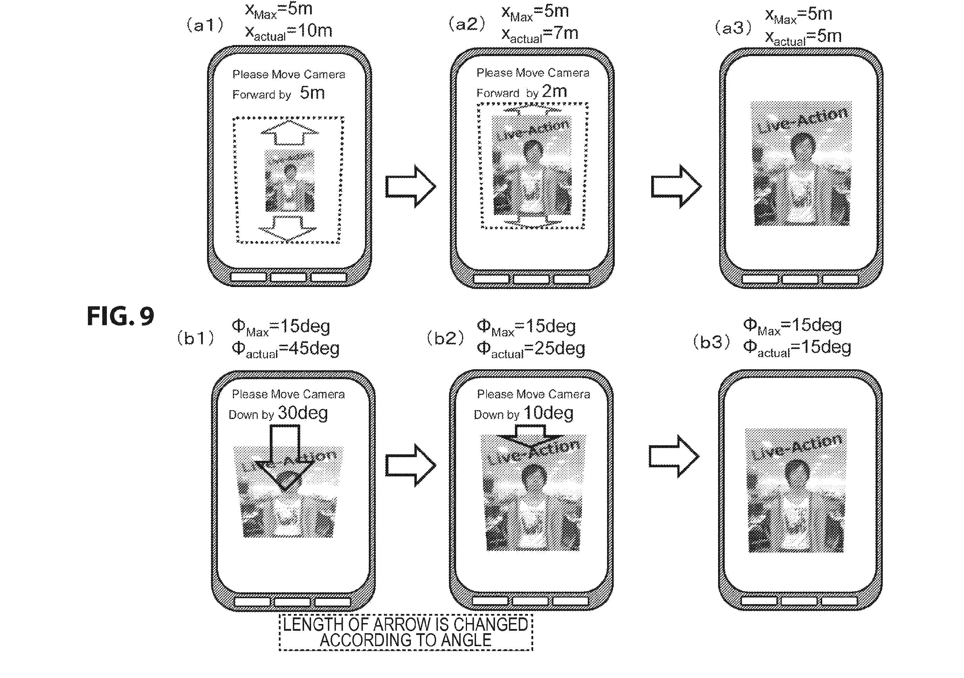

A display example of the instruction icon and the description is illustrated in FIG. 9.

FIGS. 9(a1) to (a3) illustrate display examples of captured images and icons when a maximum allowable distance (Xmax) between a camera and a subject is set to 5 m.
(a1) to (a3) illustrate the following states.
(a1) A subject distance (Xactual) of a captured image is 10 m, and an instruction icon and instruction information for bringing a camera close to a subject are displayed.
(a2) A subject distance (Xactual) of a captured image is 7 m, and an instruction icon and instruction information for bringing a camera close to a subject are displayed.
(a3) A subject distance (Xactual) of a captured image is 5 m and is matched with a maximum allowable distance (Xmax). Thus, it is in a state in which the display of an instruction icon and instruction information has disappeared.

FIGS. 9(b1) to (b3) illustrate display examples of captured images and icons when a maximum allowable vertical angle (Φmax) between a camera and a subject is set to 15 degrees.
(b1) to (b3) illustrate the following states.
(b1) A vertical angle (Φactual) of a camera with respect to a subject of a captured image is 45 degrees, and an instruction icon and instruction information for directing the vertical angle of the camera in a more vertical direction.
(b2) A vertical angle (Φactual) of a camera with respect to a subject of a captured image is 25 degrees, and an instruction icon and instruction information for directing the vertical angle of the camera in a more vertical direction.
(a3) A vertical angle (Φactual) of a camera with respect to a subject of a captured image is 15 degrees and is matched with a maximum allowable angle (Φmax). Thus, it is in a state in which the display of an instruction icon and instruction information has disappeared.

Therefore, when capturing virtual image content, the instruction information is displayed so that the user can capture content in the allowable range.

### [4-2. Embodiment that Performs Image Edge Processing upon Virtual Image Display Processing]

Next, the embodiment that performs the image edge processing upon the virtual image display processing will be described.

The present embodiment is an embodiment that performs edge processing (mask processing) such as edge blurring of an edge portion of the virtual image, which is a boundary region of the captured object, so as to perform superimposition display of the virtual image with no discomfort with respect to the captured image upon processing of displaying the virtual image according to the flowchart of FIG. 3 described above.

The present configuration realizes the way to show an image with minimized discomfort even when a part of an object to be superimposed is deviated from an angle of view when capturing AR moving image content.

Upon superimposition display of a virtual image, for example, when a part of an object to be superimposed is deviated from an angle of view and the object to be superimposed is all fitted in an angle of view of a display of a client terminal, the discomfort is reduced by processing such as edge blurring of a virtual image object.

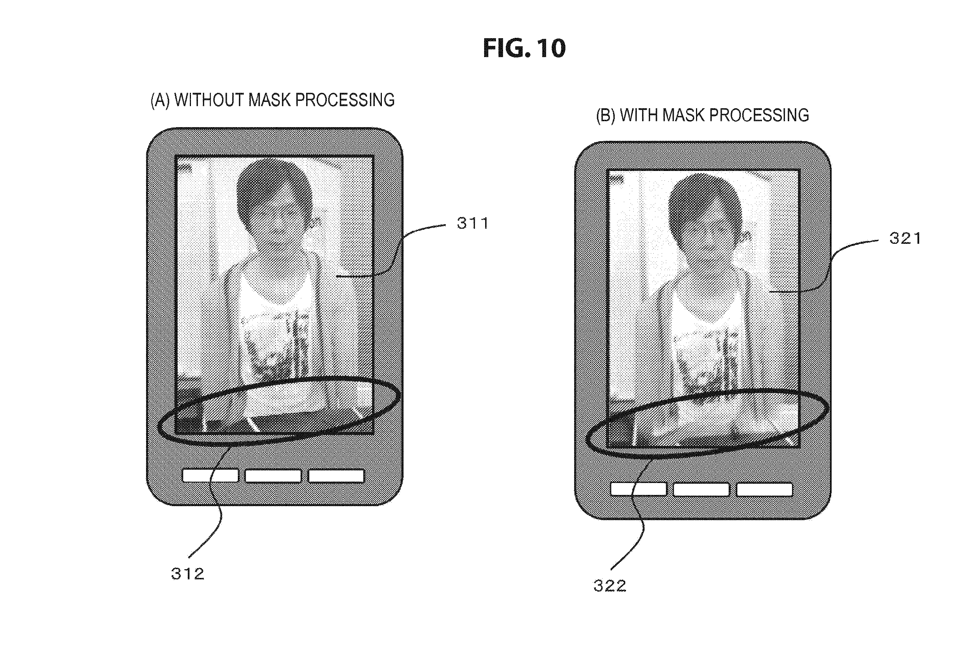

For example, FIG. 10(A) is a display example of a virtual object when the mask processing of the present embodiment is not applied.

In an edge region 312 of a lower end of a virtual image (person) 311 displayed on a captured image, a subject image is cut in a straight line and thus looks unnatural.

On the other hand, FIG. 10(B) is a display example of a virtual object when the mask processing of the present embodiment is applied.

The mask application processing such as blurring is performed on the edge region 322 of the lower end of the virtual image (person) 321 displayed on the captured image, and unnaturalness is eliminated.

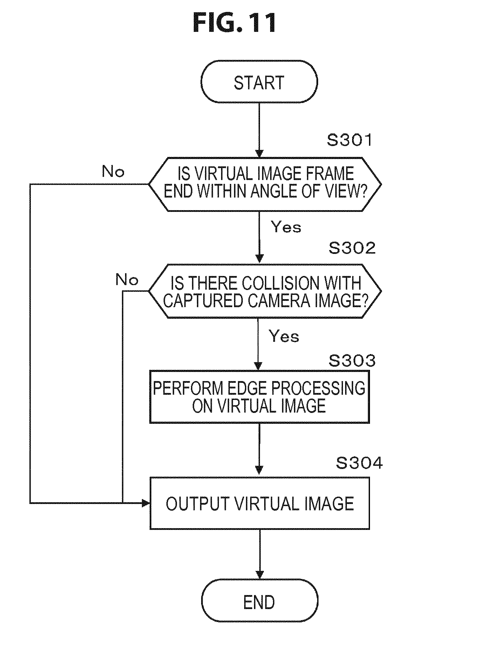

FIG. 11 illustrates a flowchart describing a processing sequence of adaptive masking processing of the present embodiment. Incidentally, the processing illustrated in this flow is performed in the "processing of superimposing the virtual image" of step S206 in the flow described with reference to FIG. 3.

The processing of the respective steps of the flow of FIG. 11 will be described.

### (Step S301)

First, in step S301, the information processing device performs virtual image content frame end determination.

In the processing frame of the virtual image content to be drawn, it is determined whether the virtual image object is fitted in the angle of view of the content. Specifically, it is checked whether an alpha value of 1 is continued in successive n pixels or more in each of vertical and horizontal outer lines of the virtual image content to be superimposed. n is an arbitrary threshold value. It is determined whether object ends corresponding to the vertical and horizontal lines are cut off. Incidentally, this processing may be performed in advance in the generation side and realized by receiving metadata.

### (Step S302)

Subsequently, in step S302, captured camera image end non-collision determination processing is performed.

In step SZ301, when the object end of the processing frame of the virtual image is cut off, it is determined whether to make the cut-off portion be visible at a position at which the content is actually superimposed on the camera image.

There is no problem if the cut-off portion in the original moving image source is completely cut off even when superimposed, but discomfort is great if the end portion appears when superimposed. That is, as illustrated in FIG. 10(A), an unnatural straight-line edge appears.

In such a case, the processing proceeds to step S303.

### (Step S303)

In step S303, image processing is performed on the edge of the virtual image content.

In step S302, when it is determined that a cut-off portion is captured in a captured camera image, blurring processing is adaptively performed on only the end of that direction.

That is, as illustrated in FIG. 10(B), blurring processing is performed on the edge region.

### (Step S304)

Finally, the final result, that is, the virtual image, in which blurring is performed on the edge of the virtual image existing in a boundary region of the virtual image and the captured image, is output as illustrated in FIG. 10(B).

Incidentally, in the case of applying the processing, in a state in which the virtual image end gets in and out from the camera frame, a frame that is not made of a frame on which edge image processing is performed is alternately generated in a flapping manner. Therefore, in the actual operation, it is suitable that a low-pass filter is inserted and smoothing is performed to some degree in a time series.

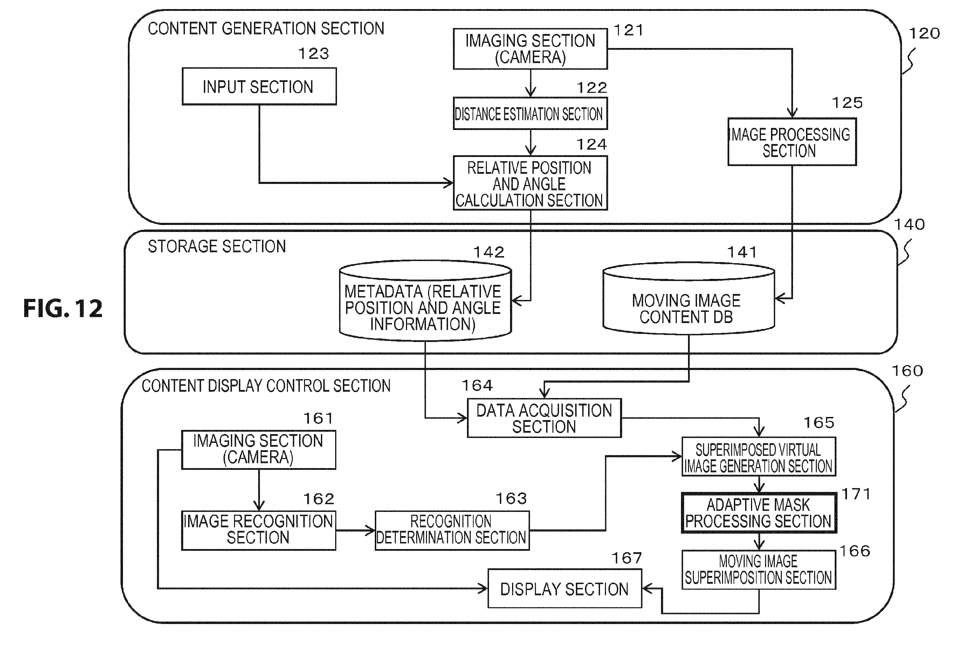

FIG. 12 illustrates a configuration example of the information processing device that performs the adaptive masking processing according to the flow illustrated in FIG. 11.

The information processing device illustrated in FIG. 12 differs from the information processing device described with reference to FIG. 7 in that an adaptive mask processing section 171 is added to the content display control section 160.

The adaptive mask processing section 171 performs the processing described with reference to FIG. 11.

The remaining configuration is the same as the configuration described with reference to FIG. 7.

### [4-3. Embodiment that Performs Processing on Plurality of Virtual Images]

Next, an embodiment that performs processing on a plurality of virtual images will be described.

The present embodiment is an embodiment in a case where there is a plurality of objects to be superimposedly displayed as a virtual image when moving image content of a virtual image is generated according to the flowchart of FIG. 2 described above.

In a case where a plurality of objects when a virtual image content is captured, it may be assumed that a distance is different for each object. In such a case, in the present embodiment, clipping processing of the object is performed when the content is generated, and each is treated as separate content and synthesized upon superimposition, so that the plurality of contents is treated with no failure.

Incidentally, the plurality of objects, that is, the plurality of virtual objects to be superimposedly displayed, is overlapped when viewed from the capturing camera, it is treated as the same virtual object for convenience. However, when assuming that the plurality of objects, of which the distance is greatly different, is superimposed, it is desirable to capture an image without overlapping.

However, in a case where the distance is matched to some extent when the plurality of objects is superimposed, for example, in a case where two persons are set such that two persons appear from different directions, hug each other, and return to the poster, a total of three objects are treated as follows: the first appearing person is an object A, the second appearing person is an object B, and the overlapping of the first person and the second person is an object C.

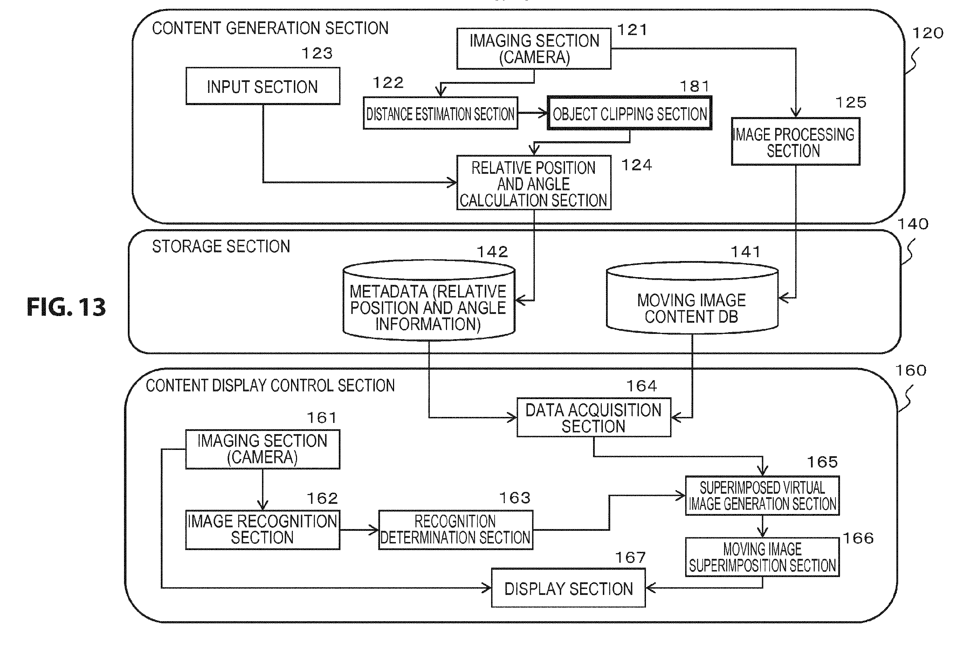

FIG. 13 illustrates a configuration example of the information processing device that performs the processing of the present embodiment.

The information processing device illustrated in FIG. 13 differs from the information processing device described with reference to FIG. 7 in that an object clipping section 181 is added to the content generation section 120.

As described above, when a plurality of virtual objects exists in an image to be captured upon generation of the virtual image content, the object clipping section 181 performs clipping processing on each virtual object.

Incidentally, with respect to the clipped virtual objects, after that, separate metadata, that is, the above-described relative position parameter Rpos and relative angle parameter Rrot are individually calculated and are stored in the storage section as the separate metadata.

Also, when the virtual image is superimposedly displayed on the content display control section 160, a superimposed image generation section 165 performs the processing of generating separate superimposed virtual images in which the respective parameters are applied to the respective objects, and superimposedly displays the generated virtual images.

The remaining configuration is the same as the configuration described with reference to FIG. 7.

### [4-4. Processing Example in Which Part of Processing is Performed in Network-connected Server]

The above-described embodiment has been described as the embodiment in which the whole processing is performed in the information processing device.

However, it may be configured such that a part of such processing is performed in a server that is network-connected to the information processing device.

For example, it may be configured such that the information processing device such as the smartphone performs only the processing of capturing by the camera and the server provides the virtual image to be superimposedly displayed.

The server performs the processing described above with reference to FIG. 2, and provides the information processing device (client) with the virtual moving content, of which the display position and the display angle have been controlled, according to the moving image sequence.

The information processing device (client) superimposedly displays the virtual image content received from the server on the captured image.

Incidentally, in this case, the information processing device (client) provides the server with information for specifying the virtual image content to be provided, for example, information such as the marker set to the poster 11 illustrated in FIG. 1(B).

Due to such a processing example, the reduction in the processing load of the information processing device (client) is realized.

### [5. Summary of Configuration of Present Disclosure]

The embodiments of the present disclosure have been described in detail with reference specific embodiments. However, it is obvious that modifications or substitutions of the embodiments can be made by those skilled in the art, without departing from the scope of the present disclosure. That is, the present invention is disclosed in the form of examples and should not be construed as limited thereto. The scope of the present disclosure should be determined with reference to the appended claims.

Additionally, the present technology may also be configured as below.
(1) An information processing device including:
   an acquisition section configured to acquire a captured image captured by an imaging section; and
   a data processing section configured to superimposedly display a virtual image generated by changing an input image on the captured image in a display section,
   wherein the data processing section displays, on the display section, the virtual image generated by changing one of a relative position and a relative angle of the imaging section and the input image, which are virtually set, in a time series.
(2) The information processing device according to (1),
   wherein the data processing section generates the virtual image, of which at least one of the display position and the display angle is changed in a time series, by performing image conversion processing to which metadata set in association with each frame of a moving image content of the virtual image is applied.
(3) The information processing device according to (2),
   wherein the data processing section acquires parameters, including a relative position parameter Rpos to be applied for determining the display position of the virtual image and a relative angle parameter Rrot to be applied for determining the display angle of the virtual image, as metadata set in association with each frame of the moving image content of the virtual image, applies the acquired parameters, generates the virtual image, of which at least one of the display position and the display angle is changed in a time series, and superimposedly displays the virtual image on the captured image.
(4) The information processing device according to (3),
   wherein the data processing section calculates a transform parameter that transforms a model view matrix Mmarker corresponding to an initial image of the virtual image into a model view matrix Mdisplay corresponding to a last image of the virtual image, multiplies the relative position parameter Rpos or the relative angle parameter Rrot, which are metadata set corresponding to each virtual image frame, with respect to the calculated transform parameter, calculates offset information to be applied to conversion processing of each virtual image frame, performs conversion processing of the virtual image frame to which the calculated offset information is applied, and generates the moving image of the virtual image of which at least one of the display position and the display angle is changed in a time series.
(5) The information processing device according to (4),
   wherein each of the relative position parameter Rpos and the relative angle parameter Rrot is a value that is sequentially changed in a range of 0 to 1 in each moving image frame from the initial image to the last image of the virtual image.
(6) The information processing device according to any one of (1) to (5),
   wherein the data processing section performs blurring process on the virtual image of a boundary portion between the virtual image and the captured image upon the processing of superimposedly displaying the virtual image on the captured image.
(7) The information processing device according to any one of (1) to (6),
   wherein the data processing section performs processing of generating moving image content of the virtual image, calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.
(8) The information processing device according to (7),
   wherein the data processing section sets values of the relative position parameter Rpos and the relative angle parameter Rrot in a range of 0 to 1 according to a subject distance of the virtual image in each moving image frame of the moving image content.
(9) The information processing device according to (7) or (8),
   wherein the data processing section sets values, which are sequentially changed in a range of 0 to 1 with respect to each moving image frame from an initial image to a last image of the virtual image, as values of the relative position parameter Rpos and the relative angle parameter Rrot.
(10) The information processing device according to (9),
   wherein the data processing section sets values of the relative position parameter Rpos and the relative angle parameter Rrot with respect to each moving image frame constituting the virtual image in different aspects according to a mode setting.
(11) The information processing device according to any one of (7) to (9),
   wherein the data processing section outputs restriction information indicating an angle and a distance of a preset allowable range to a display section upon processing of generating moving image content of the virtual image, and generates moving image content of the virtual image including a virtual object within the angle and the distance of the allowable range.
(12) An information processing device including:
   an imaging section configured to performing image capturing; and
   a data processing section configured to generate moving image content of a virtual image, based on a captured image of the imaging section,
   wherein the data processing section calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.
(13) The information processing device according to (12),
   wherein the data processing section sets values of the relative position parameter Rpos and the relative angle parameter Rrot in a range of 0 to 1 according to a subject distance of the virtual image in each moving image frame of the moving image content.
(14) An information processing device including:
   an imaging section configured to performing image capturing;
   a display section configured to display a captured image of the imaging section; and
   a data processing section configured to superimposedly display a virtual image on the captured image displayed on the display section,
   wherein the data processing section acquires, from a server, a moving image of the virtual image, of which at least one of a display position and a display angle is changed in a time series, and superimposedly displays the acquired virtual image on the captured image.

Further, a method of processing performed in the above apparatus and system and a program to execute the processing are included in the configuration of the present disclosure.

Furthermore, the processing sequence that is explained in the specification can be implemented by hardware, by software and by a configuration that combines hardware and software. In a case where the processing is implemented by software, it is possible to install in memory within a computer that is incorporated into dedicated hardware a program in which the processing sequence is encoded and to execute the program. It is also possible to install a program in a general-purpose computer that is capable of performing various types of processing and to execute the program. For example, the program can be installed in advance in a storage medium. In addition to being installed in a computer from the storage medium, the program can also be received through a network, such as a local area network (LAN) or the Internet, and can be installed in a storage medium such as a hard disk or the like that is built into the computer.

Note that the various types of processing that are described in this specification may not only be performed in a temporal sequence as has been described, but may also be performed in parallel or individually, in accordance with the processing capacity of the device that performs the processing or as needed. Furthermore, the system in this specification is not limited to being a configuration that logically aggregates a plurality of devices, all of which are contained within the same housing.

### Industrial Applicability

As described above, according to the configuration of one embodiment of the present disclosure, the virtual image, of which the display position or the display angle is changed with the passage of time, can be superimposedly displayed on the captured camera image displayed on the display section.

Specifically, the configuration includes an imaging section, a display section configured to display a captured image of the imaging section, and a data processing section configured to superimposedly display a virtual image on the captured image displayed on the display section. The data processing section superimposedly displays the moving image of the virtual image, of which the display position and the display angle are changed in a time series, on the captured image. The data processing section acquires the parameters, that is, the relative position parameter Rpos to be applied for determining the display position of the virtual image and the relative angle parameter Rrot to be applied for determining the display angle of the virtual image, as the metadata corresponding to the frame of the virtual image content, applies the acquired parameters, and generates and superimposedly displays the virtual image, of which the display position or the display angle is changed in a time series.

According to such configurations, the virtual image, of which the display position or the display angle is changed with the passage of time, can be superimposedly displayed on the captured camera image.

### Reference Signs List

- 11: poster
- 15: captured camera image
- 21: virtual image
- 31: virtual image
- 120: content generation section
- 121: imaging section (camera)
- 122: distance estimation section
- 123: input section
- 124: relative position and angle calculation section
- 125: image processing section
- 140: storage section
- 141: metadata
- 142: moving image content database
- 160: content display control section
- 161: imaging section (camera)
- 162: image recognition section
- 163: recognition determination section
- 164: data acquisition section
- 165: superimposed virtual image generation section
- 166: moving image superimposition section
- 167: display section
- 171: adaptive mask processing section
- 181: object clipping section

## Claims

1. An information processing device comprising:
an acquisition section configured to acquire a captured image captured by an imaging section; and
a data processing section configured to superimposedly display a virtual image generated by changing an input image on the captured image in a display section,
wherein the data processing section displays, on the display section, the virtual image generated by changing one of a relative position and a relative angle of the imaging section and the input image, which are virtually set, in a time series.

2. The information processing device according to claim 1,
wherein the data processing section generates the virtual image, of which at least one of the display position and the display angle is changed in a time series, by performing image conversion processing to which metadata set in association with each frame of a moving image content of the virtual image is applied.

3. The information processing device according to claim 2,
wherein the data processing section acquires parameters, including a relative position parameter Rpos to be applied for determining the display position of the virtual image and a relative angle parameter Rrot to be applied for determining the display angle of the virtual image, as metadata set in association with each frame of the moving image content of the virtual image, applies the acquired parameters, generates the virtual image, of which at least one of the display position and the display angle is changed in a time series, and superimposedly displays the virtual image on the captured image.

4. The information processing device according to claim 3,
wherein the data processing section calculates a transform parameter that transforms a model view matrix Mmarker corresponding to an initial image of the virtual image into a model view matrix Mdisplay corresponding to a last image of the virtual image, multiplies the relative position parameter Rpos or the relative angle parameter Rrot, which are metadata set corresponding to each virtual image frame, with respect to the calculated transform parameter, calculates offset information to be applied to conversion processing of each virtual image frame, performs conversion processing of the virtual image frame to which the calculated offset information is applied, and generates the moving image of the virtual image of which at least one of the display position and the display angle is changed in a time series.

5. The information processing device according to claim 4,
wherein each of the relative position parameter Rpos and the relative angle parameter Rrot is a value that is sequentially changed in a range of 0 to 1 in each moving image frame from the initial image to the last image of the virtual image.

6. The information processing device according to claim 1,
wherein the data processing section performs blurring process on the virtual image of a boundary portion between the virtual image and the captured image upon the processing of superimposedly displaying the virtual image on the captured image.

7. The information processing device according to claim 1,
wherein the data processing section performs processing of generating moving image content of the virtual image, calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

8. The information processing device according to claim 7,
wherein the data processing section sets values of the relative position parameter Rpos and the relative angle parameter Rrot in a range of 0 to 1 according to a subject distance of the virtual image in each moving image frame of the moving image content.

9. The information processing device according to claim 7,
wherein the data processing section sets values, which are sequentially changed in a range of 0 to 1 with respect to each moving image frame from an initial image to a last image of the virtual image, as values of the relative position parameter Rpos and the relative angle parameter Rrot.

10. The information processing device according to claim 9,
wherein the data processing section sets values of the relative position parameter Rpos and the relative angle parameter Rrot with respect to each moving image frame constituting the virtual image in different aspects according to a mode setting.

11. The information processing device according to claim 7,
wherein the data processing section outputs restriction information indicating an angle and a distance of a preset allowable range to a display section upon processing of generating moving image content of the virtual image, and generates moving image content of the virtual image including a virtual object within the angle and the distance of the allowable range.

12. An information processing device comprising:
an imaging section configured to performing image capturing; and
a data processing section configured to generate moving image content of a virtual image, based on a captured image of the imaging section,
wherein the data processing section calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

13. The information processing device according to claim 12,
wherein the data processing section sets values of the relative position parameter Rpos and the relative angle parameter Rrot in a range of 0 to 1 according to a subject distance of the virtual image in each moving image frame of the moving image content.

14. An information processing device comprising:
an imaging section configured to performing image capturing;
a display section configured to display a captured image of the imaging section; and
a data processing section configured to superimposedly display a virtual image on the captured image displayed on the display section,
wherein the data processing section acquires, from a server, a moving image of the virtual image, of which at least one of a display position and a display angle is changed in a time series, and superimposedly displays the acquired virtual image on the captured image.

15. An information processing method, which is performed by an information processing device, wherein the information processing device comprises an acquisition section configured to acquire a captured image captured by an imaging section, and a data processing section configured to superimposedly display a virtual image generated by changing an input image on a display section, and
wherein the data processing section displays, on the display section, the virtual image generated by changing one of a relative position and a relative angle of the imaging section and the input image, which are virtually set, in a time series.

16. An information processing method, which is performed by an information processing device,
wherein the information processing device comprises an imaging section configured to perform image capturing, and a data processing section configured to generate moving image content of a virtual image, based on a captured image of the imaging section, and
wherein the data processing section calculates parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and stores the calculated parameters in a storage section as metadata corresponding to image frames.

17. A program for causing an information processing device to execute information processing,
wherein the information processing device comprises:
an acquisition section configured to acquire a captured image captured by an imaging section; and
a data processing section configured to superimposedly display a virtual image generated by changing an input image on the captured image in a display section, and
wherein the program causes the data processing section to display, on the display section, the virtual image generated by changing one of a relative position and a relative angle of the imaging section and the input image, which are virtually set, in a time series.

18. A program for causing an information processing device to execute information processing,
wherein the information processing device comprises an imaging section configured to perform image capturing, and a data processing section configured to generate moving image content of a virtual image, based on a captured image of the imaging section, and
wherein the program causes the data processing section to calculate parameters, including a relative position parameter Rpos to be applied for determining the display position of the virtual image and a relative angle parameter Rrot to be applied for determining the display angle of the virtual image, with respect to frames constituting the moving image content of the virtual image upon processing of generating the moving image content of the virtual image, and store the calculated parameters in a storage section as metadata corresponding to image frames.
